# EUROPÄISCHE PATENTSCHRIFT

(11) **EP 0 827 805 B1**
(45) Veröffentlichungstag und Bekanntmachung des Hinweises auf die Patenterteilung: **18.12.2002**
(21) Anmeldenummer: 97115211.1
(22) Anmeldetag: 03.09.1997
(51) Int. Cl.: B23Q 1/00

(54) **Spannvorrichtung zum Spannen eines Schnellspannzylinders auf einer Trägerplatte für Bearbeitungsmaschinen**
Clamping device for clamping a quick clamping cylinder to a barrier plate for a working machine
Dispositif de serrage pour serrer un cylindre de serrage rapide sur un plaque porteuse d'une machine d'usinage

(30) Priorität: 09.09.1996 DE 29615613 U
(43) Veröffentlichungstag der Anmeldung: 11.03.1998
(73) Patentinhaber: Stark Spannsysteme GmbH, 6840 Götzis (AT)
(72) Erfinder: Stark Spannsysteme GmbH, 6840 Götzis (AT)
(74) Vertreter: von Ahsen, Erwin-Detlef, Dipl.-Ing.

(56) Entgegenhaltungen:
- DE-A- 4 135 418
- US-A- 4 636 135
- US-A- 4 906 123
- US-A- 5 415 384

## Beschreibung

Gegenstand der vorliegenden Erfindung ist eine Spannvorrichtung nach dem Oberbegriff des Anspruchs 1.

Bei der auf den gleichen Anmelder zurückgehenden Erfindung nach der DE 41 35 418 A1 bestand der Nachteil, daß der untere Boden der Spannvorrichtung, mit von unten nach oben reichenden Schrauben festgeschraubt wurde, was zu einer schwierige Demontage der gesamten Vorrichtung führte. Es mußte stets der gesamte Zylinder abgebaut werden, um Einstellungen oder Wartungen vorzunehmen.

Darüber hinaus konnte diese Bauart nicht oder nur mit sehr großem Aufwand direkt in einen Tisch oder einen Würfel integriert werden; es mußte stets der vollständige Spannzylinder eingesetzt werden.

Bei derartigen Vorrichtungen nach der DE 41 35 418 A1 besteht die Gefahr, daß Späne von oben her eindringen und vorallem in den Kugelkäfig eindringen.

Weiterer Nachteil dieser vorbekannten Vorrichtung ist, daß im Bereich zwischen dem Mittelkolben und den seitlichen Aufnahmeräumen für die Spannfeder ein Verbindungsgang vorhanden ist, der dazu führt, daß Wasser eindringt und dieses Wasser sich in den Raum der Spannfeder sammelt und zu Beschädigungen führt.

Außerdem füllt dieses Wasser den Hohlraum auf, der dadurch nicht mehr kompressibel ist, so daß die Wirkung der Spannfedern aufgehoben ist.

Mit der US-A-5,415,384 ist eine Vorrichtung zum lösbaren Befestigen von zu bearbeitenden Werkstücken mit ähnlichem Funktionsprinzip wie die Vorrichtung der DE 41 35 418 A1 bekannt geworden, wobei jedoch in dem Schnellspannzylinder der Raum zwischen dem mittleren Einzugsbolzen und den darunter zwischen ortsfester Grundplatte und beweglichem Hydraulikkolben befindlichen Spannfedern abgedichtet ist.

Auch hier besteht wiederum der Nachteil, dass zu Wartungsund Reparaturzwecken zahlreiche Schrauben gelöst werden müssen, um an den beweglichen Kugelkäfig und die Spannfedern heran zu kommen. Weiterhin ist ein Zugriff zum Kugelkäfig und zu den Spannfedern nicht über den Deckel oder die Grundplatte gleichzeitig möglich.

Weiterer Nachteil dieser Vorrichtung gemäß der US-A-5,415,384 ist, daß eine verminderte Dichtwirkung durch erhöhte Verschleißanfälligkeit der bewegten Dichtungsringe zwischen beweglichem Hydraulikkolben und feststehendem Deckel des Schnellspannzylinders besteht.

Insgesamt besteht also ein erhöhter Montage- bzw. Demontageaufwand und eine verschleißanfälligere Dichtwirkung der Vorrichtung zum lösbaren Befestigen von zu bearbeitenden Werkstücken durch diese Bauart nach der US-A-5,415,384.

Hier setzt die Erfindung ein, die eine Vorrichtung, d. h. einen Schnellspannzylinder der eingangs genannten Art so weiterbildet, daß sie wesentlich einfacher und schneller montierbar/demontierbar ist und damit einen einfacheren und schnelleren Zugriff auf einen Kugelkäfig erlaubt, und weiterhin gegen Eindringen von Wasser in den Federraum besser geschützt ist.

Zur Lösung der gestellten Aufgabe ist die Erfindung durch die technische Lehre des Anspruches 1 gekennzeichnet.

Wesentlich hierbei ist, daß der Raum zwischen dem mittleren Einzugsbolzen und den seitlich daran anschließenden Spannfedern nun erfindungsgemäß abgedichtet durch einen mittleren, eingelegten Dichtungsring ist, der nach oben gegen axiale Verschiebung von einem ersten Sicherungsring geschützt ist und nach unten gegen axiale Verschiebung von einem weiteren Sicherungsring geschützt ist.

Weiterhin stützt sich der mittlere, eingelegte Dichtungsring bevorzugt mit einem vertikal nach unten gerichteten Schenkel über einen O-Ring am Kolben ab.

Im Rahmen der vorliegenden Erfindung werden natürlich auch alle anderweitigen, den gleichen Dichtungszweck erfüllenden, Dichtungsmittel, wie beispielsweise Lippendichtung oder O-Ringdichtung, in allen bei der vorgegebenen Schnellspannzylinder-Ausbildung möglichen Anordnungen, beansprucht.

Ferner ist wichtig, daß der Deckel mit seinem nach unten gerichteten Schenkel sich an einem gleichfalls vorhandenen O-Ring abstützt und hierbei eine Dichtwirkung erzielt wird.

Von der Mittenbohrung zu der seitlichen anschließenden Bohrung besteht also eine abdichtende Verbindung, die durch den Dichtungsring und den zugeordneten O-Ringen erreicht wird, sowie durch den Schenkel, der mit dem Dichtungsring diese Abdichtung bewirkt.

Ein weiterer wesentlicher Vorteil der vorliegenden Erfindung liegt nun darin, daß die Schraube zur Befestigung des Deckels nun von oben her in das Unterteil des Schnellspannzylinders eingeschraubt wird, wodurch eine leichte Zerlegbarkeit gegeben ist.

Zum Zerlegen der Vorrichtung mußten nämlich vorher diese Schrauben gelöst werden, wodurch sich die gesamte Scheibe nach oben unter der Kraft der Tellerfedern abhob und hierdurch eine schwierige, erneute Montage der Vorrichtung notwendig war.

Erfindungsgemäß muß diese Montage nun nicht mehr erfolgen, denn der Einzugsbolzen wird nun nach oben herausgezogen, wodurch der Seegerring frei wird und dieser Seegerring kann nun herausgezogen werden und es wird dann der gesamte Dichtungsring ebenfalls herausgezogen, wodurch dann der Kugelkäfig frei zugänglich wird und nach oben herausgenommen und gereinigt werden kann. Es bestehen also wesentliche Vorteile bei der leichten Zerlegbarkeit dieser Vorrichtung im Vergleich zu der Vorrichtung nach der DE 41 35 418 A1.

Die Schrauben müssen praktisch nicht geöffnet werden und es besteht nicht mehr die Gefahr, daß die vorzugsweise als Tellerfedern ausgebildeten Spannfedern die gesamte Scheibe nach oben herausdrücken.

Im übrigen kann man in den Hohlraum der Mittenbohrung von oben her hineinblasen und die dort eingedrungenen Späne leicht durch Einblasen entfernen, während dies wegen der Abdichtung der gesamten Hohlräume bei der Vorrichtung nach der DE 41 35 418 A1 nicht möglich war.

Die gesamte Anordnung ist also leichter zugänglich und der Kugelkäfig kann auch ohne Zerlegen der Vorrichtung durch Einblasen von Luft leicht gereinigt werden.

Darüber hinaus kann nun ein leichter Einbau in einen Tisch oder einen Winkel erfolgen. Zu diesem Zweck wird die untere Hälfte des Schnellspannzylinders in dem Tisch bzw. Winkel realisiert und lediglich noch der Deckel aufgesetzt und mit den genannten Schrauben befestigt. Sämtliche Funktionen, die bisher diese untere Hälfte geleistet hat, werden nun direkt in den Tisch integriert, der als Zylinder dient. Dichtigkeitsprobleme wie beim bisherigen Einbau des Zylinders entfallen.

Durch das dichte Ausbilden ist darüber hinaus eine Erhöhung der Einzugskraft möglich. Wurde diese bisher allein durch die Spannfedern erreicht, so kann nun zusätzlich eine Beaufschlagung des bisher nur für die Entriegelung erforderlichen Hydraulikzylinders derart erfolgen, daß dieser noch zusätzlich nach unten gedrückt wird.

Ein Nebenaspekt der vorliegenden Anmeldung liegt auf der besonderen Ausgestaltung des Kugelkäfigs, der in dem erfindungsgemäßen Spannzylinder verwendet wird. Bisher wurden Kugelkäfige verwendet, die die Kugeln lediglich lose aufgenommen haben. Beim Entfernen des Kugelkäfigs konnten die Kugeln aus diesem herausfallen und mußten erneut eingesetzt werden. Die Erfindung schlägt nun vor, den Bewegungsspielraum der Kugeln gegenüber den Käfig zu begrenzen. An der Außenseite ist eine Umbördelung vorgesehen, an der Innenseite ein Anschlag. Dieser Anschlag entsteht dadurch, daß die für jede Kugel vorgesehene Bohrung nicht vollständig durch den Käfig hindurchgeht, sondern nur bis zu einer bestimmen Tiefe. Es bilden sich dann Lappen, die ein Herausfallen der Kugeln verhindern.

Es werden weiter spezielle Bauarten eines Einzugsnippels vorgeschlagen zur Verwendung zusammen mit der erfindungsgemäßen Vorrichtung vorgeschlagen. Eine erste Bauart sieht vor, daß der Einzugsnippel mit einer Gewindestange befestigt wird. Diese Gewindestange ist an dem anderen Ende in einem Gegenlager, in einer Palette oder direkt an dem zu bearbeitenden Werkstück befestigt. In einer anderen Bauart ist vorgesehen, den Nippel von der Vorderseite her mit einer durchgehenden Schraube zu befestigen. Sollte der Nippel brechen, so wird er durch die Schraube noch zusätzlich gehalten. In einer dritten Bauform ist vorgesehen, die Spitze des Nippels aus einem Sondermaterial herzustellen.

Merkmale dieser drei Bauformen können auch kombiniert werden.

Der Erfindungsgegenstand der vorliegenden Erfindung ergibt sich nicht nur aus dem Gegenstand der einzelnen Schutzansprüche, sondern auch aus der Kombination der einzelnen Schutzansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schnitt durch einen Schnellspannzylinder ohne Paletten-Montage in gespanntem und ungespanntem Zustand;
- Figur 2:: Draufsicht auf den Schnellspannzylinder ohne Paletten-Montage mit Einzugsbolzen-Feder-Anordnung;
- Figur 3:: Schnitt durch den Schnellspannzylinder ohne Paletten-Montage in gespanntem und ungespanntem Zustand;
- Figur 4, 5:: je eine Ansicht gemäß Fig. 2, 3 in einer zweiten Ausführungsform;
- Figur 6, 7:: je eine Ansicht gemäß Fig. 2, 3 in einer dritten Ausführungsform;
- Fig. 8:: einen Querschnitt durch einen integrierten Schnellspannzylinder;
- Fig. 9:: eine vergrößerte Darstellung des Nippels in gespanntem und ungespanntem Zustand;
- Fig. 10:: vergrößerte Darstellung eines Ausschnitts des Kugelkäfigs in gespanntem und ungespanntem Zustand;
- Fig. 11:: eine Querschnitt gemäß XI-XI in Fig. 10; und
- die Fig. 12 - 17:: unterschiedliche Bauarten und Befestigungen von Einzugsnippeln.

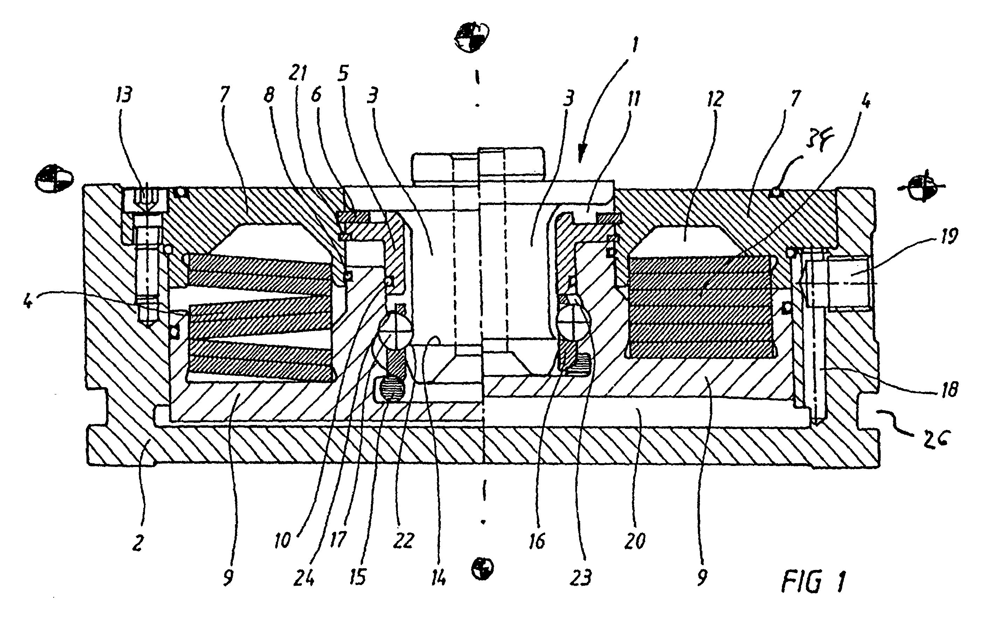

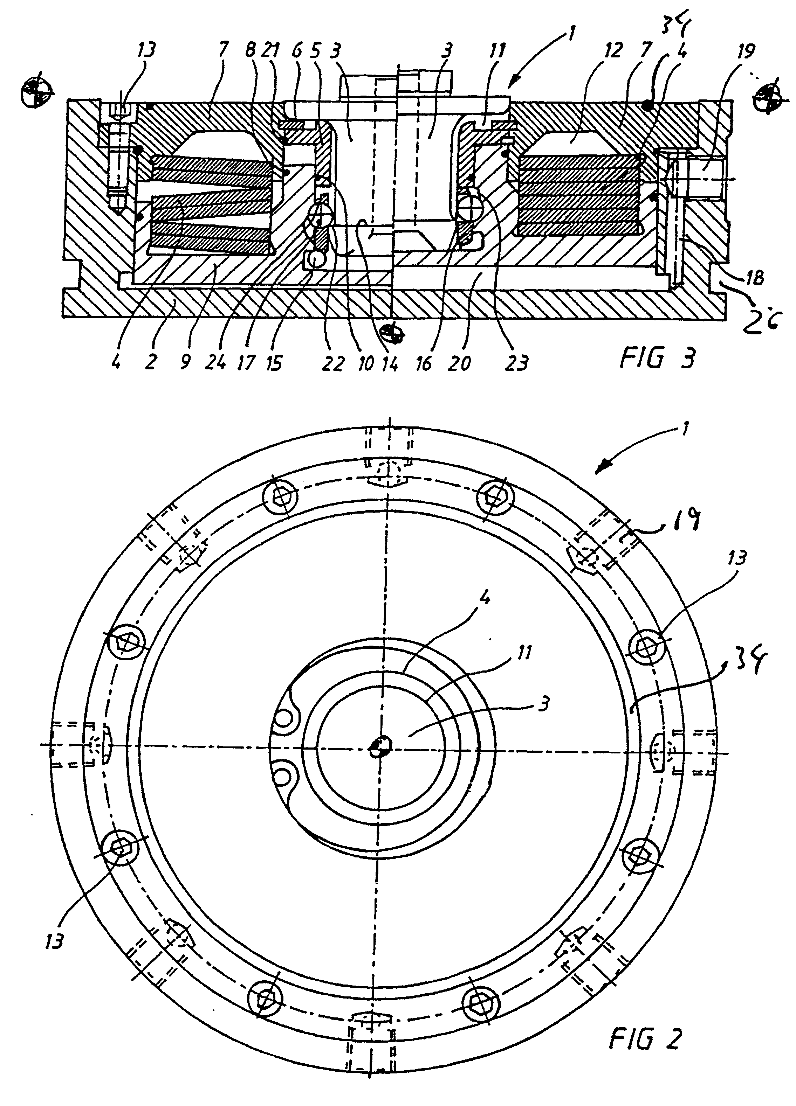

In Figur 1 und 3 ist ein gespannter und ungespannter Schnellspannzylinder 1 mit jeweiliger Klemmeinrichtung ohne die nach der DE 41 35 418 A1 bekannte, mit der in dem Schnellspannzylinder 1 verklemmbaren Palette, dargestellt.

Die Klemmeinrichtung besteht dabei im wesentlichen aus Spannfedern 4, die zentrisch den jeweiligen Einzugsbolzen 3 umgeben und aus einem axial verschiebbaren Hydraulikkolben 9.

Der Schnellspannzylinder 1 weist weiterhin einen Deckel 7 auf, der mittels Schrauben 13 auf das Unterteil 2 des Schnellspannzylinders 1 aufgeschraubt ist, wodurch eine leichte Zerlegbarkeit des Schnellspannzylinders 1 gegeben ist.

Aus den Figuren 1 und 3 ist weiterhin ersichtlich, daß in dem Schnellspannzylinder 1 der Hohlraum der den Einzugsbolzen 3 enthaltenen Mittenbohrung 11 durch einen in den Schnellspannzylinder 1 eingelegten Dichtungsring 5 von dem Hohlraum des Freistichs 12, der die vorzugsweise als Tellerspannfedern ausgebildeten Spannfedern 4 enthält, derart abgedichtet ist, daß von außen keine Flüssigkeit in den Raum der Spannfedern 4 gelangen kann, wodurch Feder-Schädigungen vermieden werden und zudem eine einwandfreie Feder-Funktion gewährleistet ist.

Dazu wird der mittlere, in dem Schnellspannzylinder 1 eingelegte Dichtungsring 5 nach oben gegen eine axiale Verschiebung durch einen aus der Vorrichtung entfernbaren Seegering 6 geschützt und weist des weiteren einen seitlich, am vertikal nach unten gerichteten Schenkel des Deckels 7 angeordneten, aus dem Schnellspannzylinder 1 nicht entfernbaren Seegerring 21 auf und stützt sich zudem mit seinem vertikal nach unten gerichteten Schenkel mit einem weiteren O-Ring 10 am Hydraulikkolben 9 ab.

Eine zusätzlich abdichtende Wirkung im Deckel-Kolben-Bereich 7, 9 wird dadruch erreicht, daß der Deckel 7 mit seinem nach unten gerichteten Schenkel sich an einem an den Hydraulikkolben 9 angeordneten O-Ring 8 abstützt.

Aufgrund der vorbeschriebenen Anordnung und Ausbildung des Dichtungsringes 5 in Zusammenwirken mit der vorteilhaften Schenkelausbildung des Deckels 7 wird in dem Schnellspannzylinder 1 die einwandfreie, flüssigkeitsundurchlässige Abdichtung der Mittenbohrung 11 von dem Freistich 12 mit den Spannfedern 4 mit den bereits beschriebenen Vorteilen gewährleistet.

Im übrigen kann man in den Hohlraum der Mittenbohrung 11 von oben her hineinblasen und dadurch die dort eingedrungenen Späne leicht entfernen, was bei der nach der DE 41 35 418 A1 bekannten Aufspannvorrichtung nicht möglich ist.

In den Figuren 1 und 3 ist weiterhin dargestellt, daß ein durch einen O-Ring 15 am Hydraulikkolben 9 abgestützter Kugelkäfig 16 mit jeweils in einer Nut 22, 23 des Einzugsbolzens 3 und des Hydraulikkolbens 9 anliegenden Kugeln 17 versehen ist.

Dabei weist der Kugelkäfig 16 einen Ringraum 24 auf, in dem am Umfang verteilt eine Vielzahl von den Kugeln 17 angeordnet sind.

In der gespannten Stellung (gemäß Figur 1, links) befinden sich die Kugeln 17 im Eingriff mit der im Außenumfang des Einzugsbolzens 3 angeordneten Ringnut 22. Gleichzeitig liegen die Kugeln 17 mit einem Teil ihres Außenumfangs in einer Schräge im Bereich der Ringnut 23 im Hydraulikkolben 9 an.

Nachdem also der Hydraulikkolben 9 durch die starke Federkraft der Spannfedern 4 nach unten gepreßt ist, werden somit über die Schrägen die Kugeln 17 nach unten mitgenommen und drücken den Kugelkäfig 16 gegen einen elastomeren O-Ring 15. Durch den elastomeren O-Ring 15 wird der Kugelkäfig 16 immer in einer bestimmten, definierten Lage gehalten.

Aus den Figuren 1 und 3 ist weiterhin ersichtlich, daß zum Entriegeln der gesamten Anordnung, der unterhalb des Hydraulikkolbens 9 befindliche Druckraum 20 mit durch eine Ölzufuhreinrichtung 19 in die Schnellspannzylinder 1 eingeführtes und durch eine Zuleitung 18 den Druckraum 20 gelangendes Hydrauliköl beaufschlagt wird, wodurch der Hydraulikkolben 9 nach oben verfährt. Dabei spannt sich zunächst der O-Ring 15 und drückt den Kugelkäfig 16 nach oben. Bei weiterer Verschiebung des Hydraulikkolbens 9 nach oben gelangen die Kugeln 17 in den Bereich der radial auswärts angeordneten Ringnut 23 des Hydraulikkolbens 9, wodurch sie gleichzeitig außer Eingriff mit der radialeinwärts angeordneten Ringnut 22 des Einzugbolzens 3 gelangen. Damit ist der Einzugsbolzen 3 entgegen der Federkraft der Spannfedern 4 entriegelt.

Zum Verriegeln wird der Einzugsbolzen 3, sofern er noch nicht in die Mittenbohrung 11 eingesetzt ist, eingefüht. Anschließend wird der Druck im Hydrauliksystem verringert, so daß die Spannfedern den Hydraulikkolben 9 nach unten zurückdrücken. Die Kugeln 17 greifen wieder in die Ringnut 22 am Einzugsbolzen 3, dieser wird nach unten mitgenommen und verriegelt.

Bei eventuellem Ausfall der Hydraulikzufuhr erfolgt eine automatische Verriegelung des Einzugsbolzens 3 durch die beschriebene Klemmeinrichtung.

Selbstverständlich ist es möglich, anstelle der im Ausführungsbeispiel beschriebenen Tellerspannfeder 4 auch anderweitige Spannfedern, wie z. B. Schraubenfedern, einzusetzen. Natürlich kann die Spannfeder auch als elastomerer Ring, beispielsweise auch Vulkulan, ausgebildet sein.

Dabei ist immer nur wichtig, daß durch die vorbeschriebene Spannfeder die erforderliche Spannkraft auf den Einzugsbolzen 3 aufgebracht wird.

Natürlich kann anstelle des Dichtungringes 5 auch ein anderweitiges, den gleichen Dichtungszweck erfüllendes Dichtungsmittel, wie z. B. eine Lippendichtung oder eine O-Ringdichtung, in unterschiedlicher Anordnung eingesetzt werden. Es ist dabei immer nur wichtig, daß durch das Dichtmittel die erfindungsgemäße, vorteilhafte Abdichtung zwischen den dem Einzugsbolzen 3 und den Spannfedern 4 gewährleistet ist.

In Figur 1 ist desweiteren aufgezeigt, daß der Einzugsbolzen 3 mit einem Ringflansch 14 ausgebildet ist.

Der Figur 2 ist in der Draufsicht der Schnellspannzylinder 1 mit der erfindungsgemäßen Einzugsbolzen-Spannfederklemmeinrichtung 3,4 mit den Befestigungsschrauben 13 zu entnehmen.

Die Befestigung des Schnellspannzylinders 1 erfolgt über nicht dargestellte Briden, die in die Umfangsnut 26 eingreifen und in geeigneter Weise festgelegt sind.

Zur Erhöhung der Einzugskraft kann eine weitere Hydraulikleitung (nicht dargestellt) in den Freiraum 12 münden und diesen gezielt mit Druck beaufschlagen. Die entstehende Kraft unterstützt die Spannfedern 4, so daß insgesamt die Einzugskraft erhöht wird. Selbstverständlich muß eine entsprechende Auslegung der Schrauben 13 sowie der Dichtungselemente erfolgen. Diese Erhöhung kann auch bei den weiteren dargestellten Ausführungsformen zum Einsatz kommen.

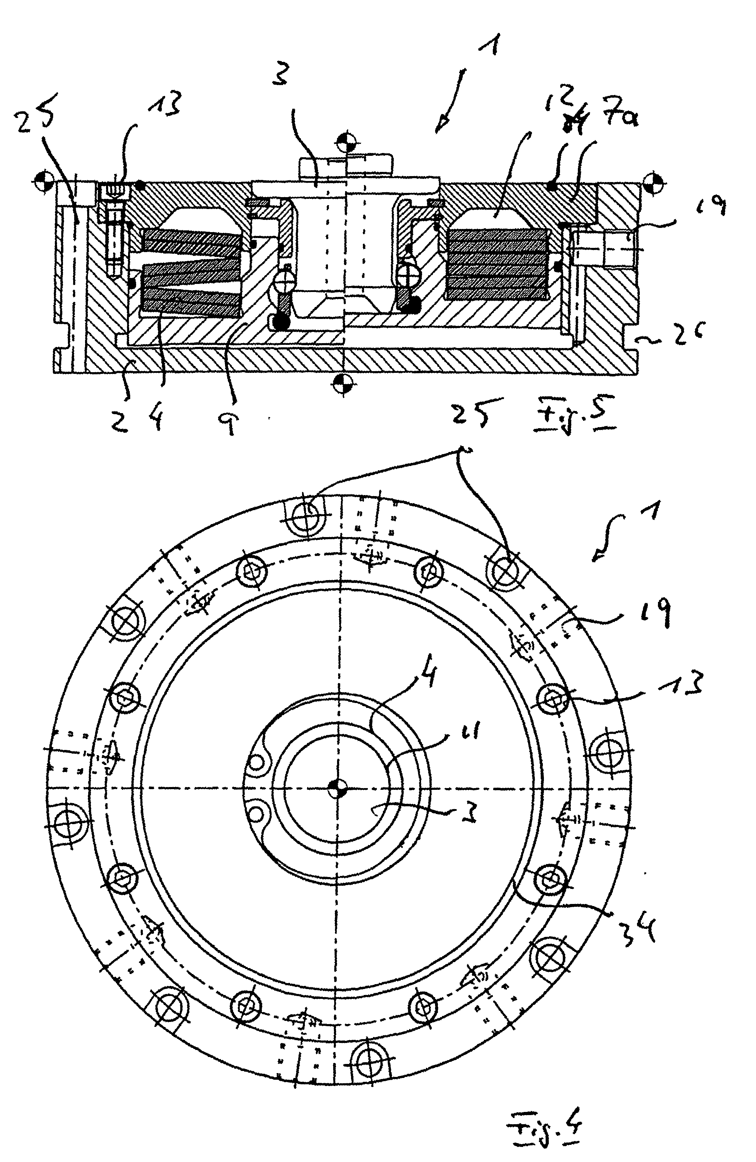

Die Figuren 4 - 7 zeigen im wesentlichen ähnliche Darstellungen andere Ausführungsformen. Zur Vereinfachung der Darstellung sind lediglich die wesentlichen Bauteile mit Bezugsziffern versehen worden sowie diejenigen, die von denen der Figuren 1 - 3 abweichen. Die Grundkonstruktion ist im wesentlichen identisch.

In den Figuren 4, 5 ist eine andere Befestigungsart dargestellt. Deutlich sind am Außenumfang mehrere Durchgangsbohrungen 25 zu erkennen, mit denen der gesamte Schnellspannzylinder 1 befestigt werden kann. Es kann hier entweder ein eigener Deckel 7a oder der bisherige Deckel 7 verwendet werden.

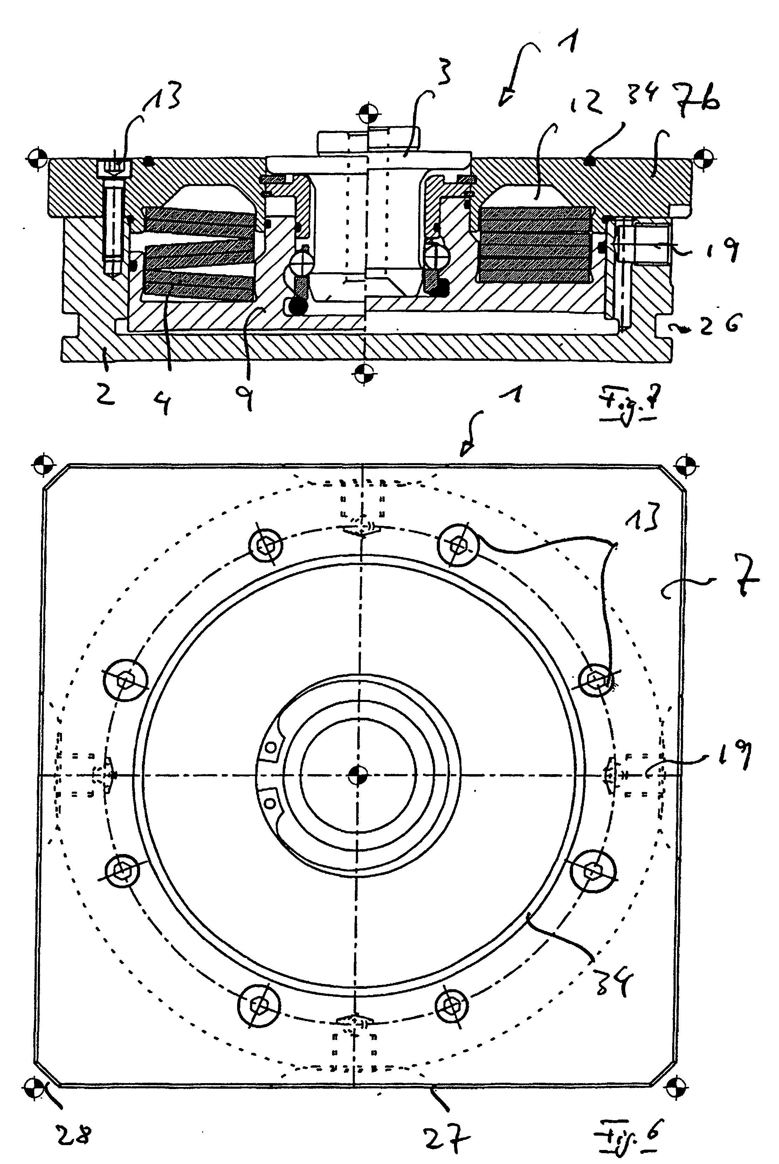

In den Figuren 6, 7 ist wird ein anderer Deckel 7b verwendet. Dieser ist im wesentlichen quadratisch ausgebildet. Diese Deckelform hat den Vorteil, daß nunmehr auch ein einziger Schnellspannzylinder 1 zur lagerichtigen Fixierung eines Werkstücks oder einer Palette verwendet werden kann. Hierzu dienen die Seitenkanten 27 und/oder die Fasen 28 als Anschlag für geeignete Elemente, z.B. Stifte. Durch dieses Zusammenwirken wird ein Verdrehsicherung erzeugt.

Es ist nicht zwingend erforderlich, daß der Deckel 7b quadratisch ausgebildet ist. In Frage kommt auch eine mehreckige Ausbildung, z.B. als Achteck oder als Rechteck. Der Deckel 7b muß auch nicht, wie dargestellt, seitlich über das Unterteil 2 vorstehen, so daß auch die Befestigung nach den Figuren 4, 5 möglich ist.

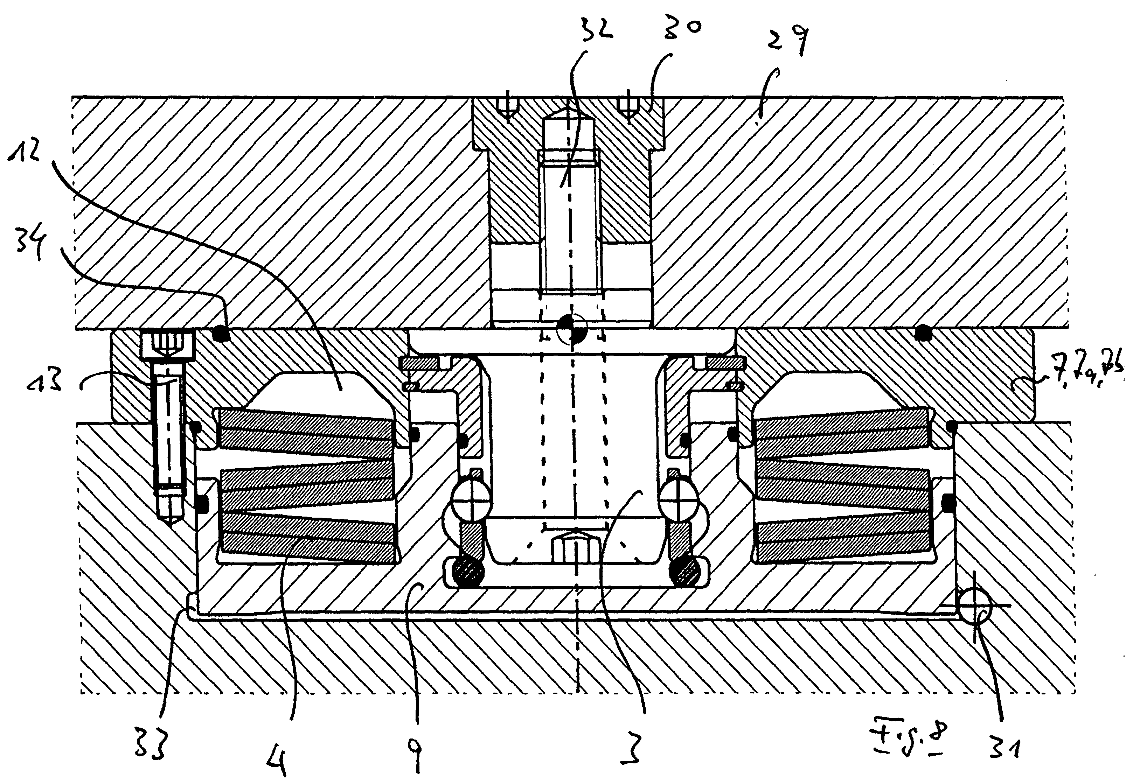

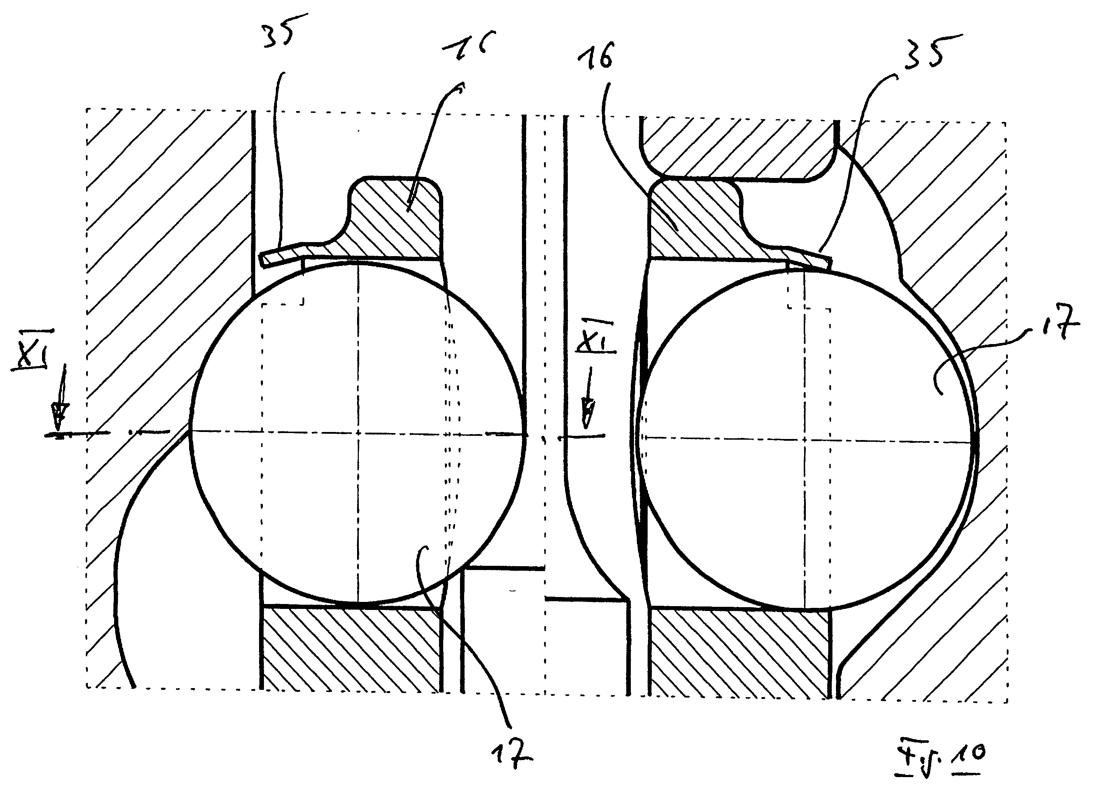

Figur 8 zeigt eine Ausführungsform, bei der der Schnellspannzylinder direkt integriert ist, z.B. in einen Tisch. Das Unterteil 2 kann vollständig entfallen. Im gezeigten Ausführungsbeispiel kann jede Art der bereits beschriebenen Deckel 7, 7a, 7b verwendet werden. Es ist weiter dargestellt, daß der Einzugsbolzen 3 in einer Palette 29 mittels eines Gegenhaltes 30 und eine durchgehende Schraube 32 befestigt ist. Eine genauere Darstellung möglicher Befestigungsarten erfolgt anhand der Figuren 12 - 17.

Die Zufuhr von Hydraulikflüssigkeit erfolgt über eine Bohrung 31, die bevorzugt in einen umlaufende Ringnut 33 führt. Diese Ringnut 33 stellt eine gute Verteilung der Hydraulikflüssigkeit über den gesamten Umfang des Hydraulikkolbens 9 sicher.

In allen gezeigten Ausführungsformen ist der Deckel 7, 7a, 7b an seiner Oberseite mit einem Dämpfungselement 34, z.B. einem O-Ring, versehen.

Fig. 9 zeigt eine vergrößerte Darstellung des Einzugsbolzens 3 zusammen mit Ausschnitten aus dem Hydraulikzylinder 9. Wie in Fig. 1 ist links der gespannte und rechts der ungespannte Zustand dargestellt. Deutlich ist die Deformation des O-Rings 15 zu erkennen, auch Einzelheiten des Kugelkäfigs 16 sind besser sichtbar dargestellt.

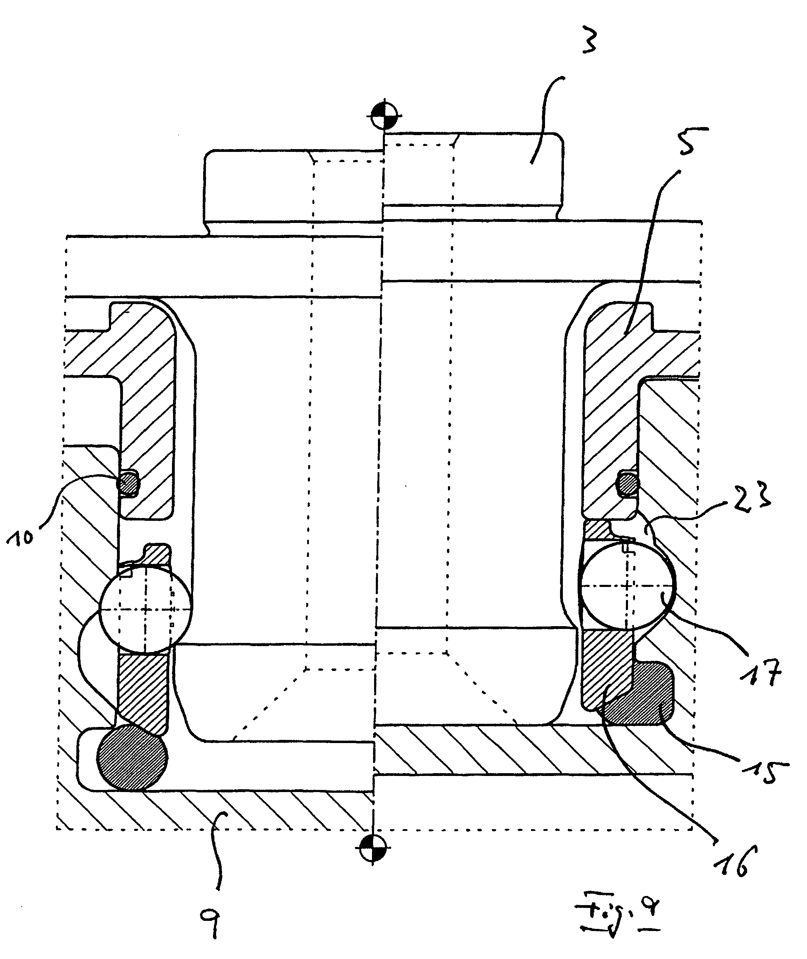

Dieser Kugelkäfig 16 wird in den Figuren 10, 11 nochmals vergrößert dargestellt, wobei Fig. 10 einen senkrechten und Fig. 11 einen waagrechten Schnitt zeigt. In Fig. 10 ist wiederum links der gespannte und rechts der ungespannte Zustand dargestellt.

Die Kugel 17 müssen in dem Kugelkäfig 16 gegen ein Herausfallen nach innen und außen gehindert werden. Das Herausfallen nach außen verhindert ein Lappen 35, der über den gesamten Umfang des Kugelkäfigs 17 hinweg umgebördelt ist (Fig. 10). Das Herausfallen nach innen wird durch Vorsprünge 37 verhindert. Diese Vorsprünge 37 entstehen dadurch, daß die Bohrungen 37, in denen die Kugeln 17 aufgenommen werden, nicht vollständig durch den Kugelkäfig 16 hindurchreichen. In Fig. 11 ist z.B. noch der Kegelwinkel des Bohrers dargestellt.

Die Vorsprünge 37 bilden sich nicht am gesamten Umfang der Bohrung 36 aus. Grund hierfür ist die Krümmung des Kugelkäfigs 16. Die Vorsprünge 37 bestehen im wesentlichen nur in der vertikalen Mitte des Kugelkäfigs 16, sind aber ausreichend, um ein Herausfallen der Kugeln 17 zu verhindern.

Die Fig. 12 - 17 zeigen unterschiedliche Befestigungsvarianten für den Einzugsbolzen. Dieser wird der Einfachheit halber durchgehend mit dem Bezugszeichen 3 versehen, obwohl es sich um verschiedene Bauformen handelt. Prinzipiell kann jeder dieser Einzugsbolzen 3 an einer Palette oder einem Werkstück befestigt werden; auch die dargestellten Befestigungsarten sind für beide Fälle einsetzbar. Die Befestigung des Einzugsbolzens 3 ist im wesentlichen unabhängig von der Ausbildung des Schnellspannzylinders 2. In allen gezeigten Ausführungsformen erfolgt die Zentrierung des Einzugsbolzens 3 in einer zugeordneten Ausnehmung der Palette 29 bzw. des Werkstücks (nicht dargestellt).

Die in Fig. 12 gezeigte Befestigungsart entspricht im wesentlichen der der Fig. 8. Der Bolzen 3 wird über ein durchgehende Schraube 32 in dem Gegenhalter 30 verankert.

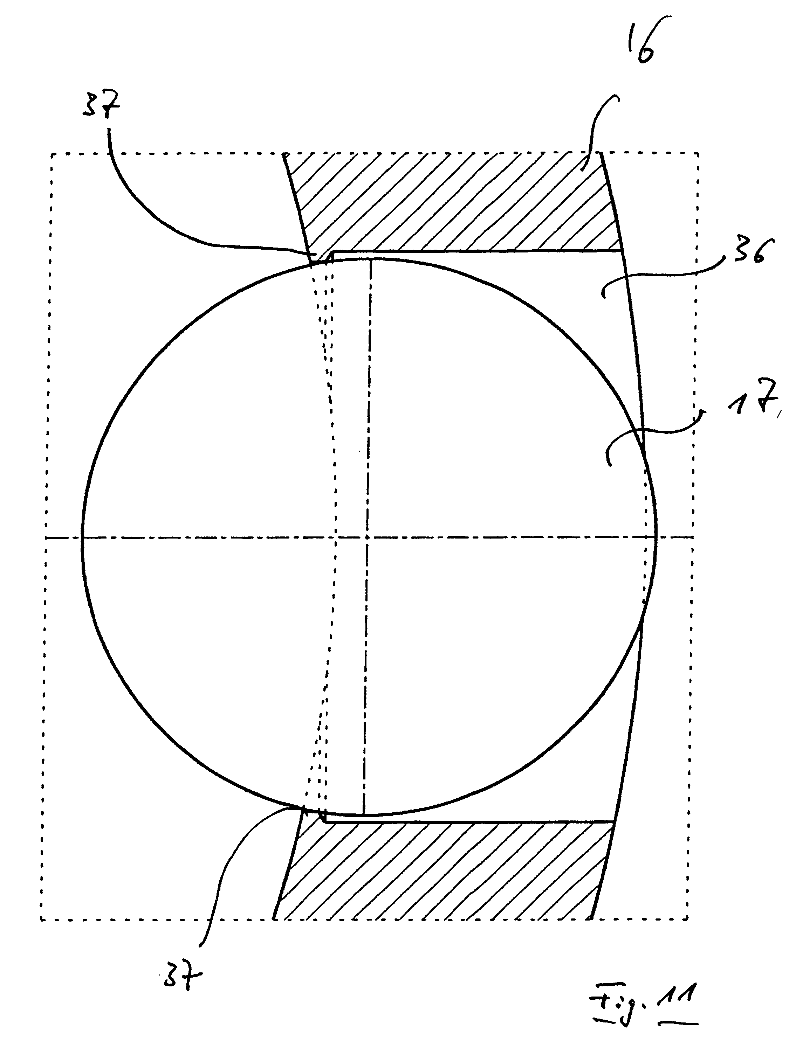

In den Fig. 13 und 14 erfolgt die Befestigung von oben her über Schrauben 38, 39, die sich jeweils in einem Einsatz 40, 40a abstützen. Der Durchmesser der Schraube 38 ist kleiner als der der Schraube 39, so daß gegebenfalls ein Helicoil oder ein Gewindeeinsatz 44 verwendet wird, um denselben Bolzen 3 für unterschiedliche Schrauben 38, 39 verwenden zu können.

Fig. 15 zeigt eine abgewandelte Ausführugsform, bei der Bolzen 3 von oben her über eine Schraube 39 und einen Einsatz 40a gehalten wird. Hier ist der Bolzen 3 zweiteilig ausgebildet; er weist einen Ansatz 42 aus einem Sondermaterial auf, z.B. extra gehärtet. Die Befestigung erfolgt über eine Schraube 43.

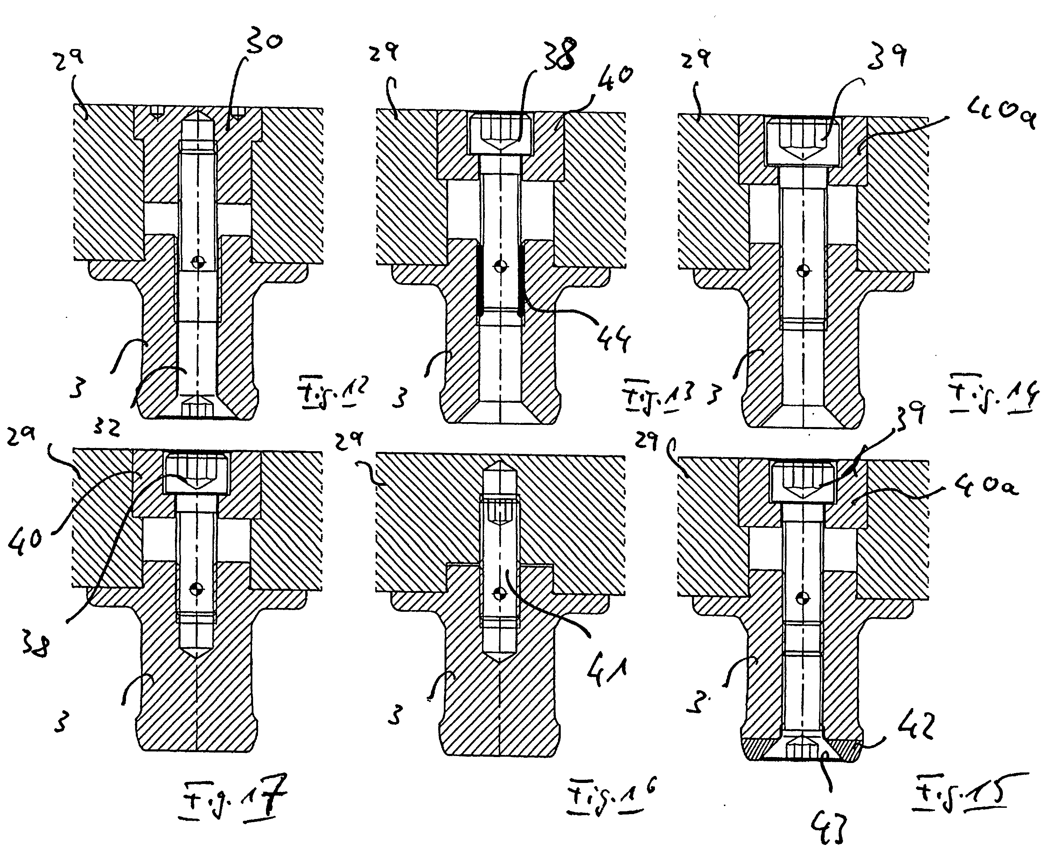

Die Fig. 16 und 17 zeigen zwei Bolzen 3, bei denen keine Durchgangsbohrung verwendet wird. Die Befestigung erfolgt entweder über eine Gewindestange 41 (Fig. 16) oder wie bei den Figuren 13, 14 über eine Schraube 38 mit Einsatz 40.

Insgesamt ergeben sich eine sehr viel bessere Abdichtung gegenüber Flüssigkeiten, eine grundlegend vereinfachte Montage und Wartung sowie neue Einsatzmöglichkeiten.

### ZEICHNUNGSLEGENDE

- 1: Schnellspannzylinder
- 2: Unterteil
- 3: Einzugsbolzen
- 4: Spannfeder
- 5: Dichtungsring
- 6: Seegerring
- 7: Deckel
- 8: O-Ring
- 9: Hydraulikkolben
- 10: O-Ring
- 11: Mittenbohrung
- 12: Freistich
- 13: Schraube
- 14: Ringflansch
- 15: O-Ring
- 16: Kugelkäfig
- 17: Kugel
- 18: Zuleitung
- 19: Ölzufuhreinrichtung
- 20: Druckraum
- 21: Segerring
- 22: Nut
- 23: Nut
- 24: Ringraum
- 25: Durchgangsbohrung
- 26: Umfangsnut
- 27: Seitenkante
- 28: Fase
- 29: Palette
- 30: Gegenhalter
- 31: Bohrung
- 32: Schraube
- 33: Ringnut
- 34: Dämpfungselement
- 35: Lappen
- 36: Bohrung
- 37: Vorsprung
- 38: Schraube
- 39: Schraube
- 40: Einsatz
- 41: Gewindestange
- 42: Ansatz
- 43: Schraube
- 44: Gewindeeinsatz

## Patentansprüche

1. Vorrichtung zum lösbaren Befestigen von zu bearbeitenden Werkstücken an einer Bearbeitungsmaschine mit einer Palette (29), an der die Werkstücke lösbar befestigt sind und die über diese Palette (29) lösbar mit der Bearbeitungsmaschine verbindbar ist, wobei die Verriegelung zwischen der Palette (29) und einem oder mehreren Schnellspannzylinder/n (1) über mindestens einen Einzugsbolzen (3) erfolgt, die an der Palette (29) befestigt sind und die in entsprechenden Aufnahmen (11, 17) an dem Schnellspannzylinder (1) klemmend eingreifen, und wobei die Klemmverbindung über Spannfedern (4) aufrechterhalten bleibt und zur Entriegelung ein Hydraulikkolben (9) betätigbar ist, der die Klemmkraft der Spannfedern (4) überwindet, und wobei in dem Schnellspannzylinder (1) der Raum zwischen dem mittleren Einzugsbolzen (3) und den Spannfedern (4) abgedichtet ist, **dadurch gekennzeichnet, daß** zur Raumabdichtung ein mittlerer Dichtungsring (5) in dem Schnellspannzylinder (1) angeordnet ist, welcher nach oben gegen axiale Verschiebung durch einen entfernbaren Sicherungsring (6) geschützt ist und nach unten gegen axiale Verschiebung durch einen weiteren Sicherungsring (21) geschützt ist.

2. Vorrichtung nach Anspruch 1, **dadurch gekennzeichnet, daß** der obere Sicherungsring (6) und/oder der untere Sicherungsring (21) zur axialen Verschiebungssicherung als Seeger-Ring ausgebildet ist.

3. Vorrichtung nach einem der Ansprüche 1 bis 2, **dadurch gekennzeichnet, daß** der untere Sicherungsring (21) seitlich an einem vertikal nach unten gerichteten Schenkel eines Deckels (7) des Schnellspannzylinders (1) angeordnet ist.

4. Vorrichtung nach einem der Ansprüche 1 bis 3, **dadurch gekennzeichnet, daß** die Spannfedern (4) radial außen liegend seitlich zum Einzugsbolzen (3) angeordnet sind.

5. Vorrichtung nach einem der Ansprüche 1 bis 4, **dadurch gekennzeichnet, daß** sich der mittlere Dichtungsring (5) mit einem vertikal nach unten gerichteten Schenkel mit einem Dichtring (10) am Hydraulikkolben (9) abstützt.

6. Vorrichtung nach einem der Ansprüche 1 bis 5, **dadurch gekennzeichnet, daß** der Deckel (7) mit seinem nach unten gerichteten Schenkel sich an einem, an dem Hydraulikkolben (9) angeordneten Dichtring (8), den Deckel-Kolben-Bereich (7, 9) abdichtend, abstützt.

7. Vorrichtung nach einem der Ansprüche 5 bis 6, **dadurch gekennzeichnet, daß** der Dichtring (8) und/oder der Dichtring (10) als O-Ring ausgebildet ist.

8. Vorrichtung nach einem der Ansprüche 1 bis 7, **dadurch gekennzeichnet, daß** der Einzugsbolzen (3) in einer Mittenbohrung (11) und die, vorzugsweise als Tellerspannfedern ausgebildeten Spannfedern (4) in einem Freistich (12) des Schnellspannzylinders (1) angeordnet sind.

9. Vorrichtung nach einem der Ansprüche 3 bis 9, **dadurch gekennzeichnet, daß** der Deckel (7) des Schnellspannzylinders (1) mittels Schrauben (13) mit dem Unterteil (2) des Schnellspannzylinders (1) lösbar verbunden ist.

10. Vorrichtung nach einem der Ansprüche 1 bis 9, **dadurch gekennzeichnet, daß** ein durch einen O-Ring (15) am Hydraulikkolben (9) abgestützter Kugelkäfig (16) mit in einem Ringraum (24) lagernden und sich an jeweils an einer Ringnut (22, 23) des Einzugsbolzens (3) und des Hydraulikkolbens (9) anlegenden Kugeln (17) versehen ist.

11. Vorrichtung nach einem der Ansprüche 1 bis 10, **dadurch gekennzeichnet, daß** der Einzugsbolzen (3) einen Ringflansch (14) aufweist.

12. Vorrichtung nach einem der Ansprüche 1 bis 11, **dadurch gekennzeichnet, daß** im Schnellspannzylinder (1) zwischen einem Unterteil (2) und dem Hydraulikkolben (9) ein mit einer Zuleitung (18) mit Ölzufuhreinrichtung (19) verbundener Druckraum (20) ausgebildet ist.

13. Vorrichtung nach einem der Ansprüche 8 bis 12, **dadurch gekennzeichnet, daß** der Freistich (12) zur Erhöhung der Einzugskraft mit einem Druckmedium beaufschlagbar ist.

14. Vorrichtung nach einem der Ansprüche 1 bis 13, **dadurch gekennzeichnet, daß** die Vorrichtung in einen Maschinentisch integriert ist.

15. Vorrichtung nach einem der Ansprüche 1 bis 14, **dadurch gekennzeichnet, daß** der Einzugsbolzen (3) ein- oder mehrteilig ausgebildet ist.

16. Vorrichtung nach einem der Ansprüche 1 bis 15, **dadurch gekennzeichnet, daß** der Einzugsbolzen (3) in der Palette (29) mittels eines Gegenhaltes (30) und einer durchgehenden Schraube (32) befestigt ist.

## Claims

1. Device for detachable fastening of work pieces to be machined on a processing machine including a pallet (29) on which said work pieces are detachably fastened and that is adapted to be detachably connected via this pallet (29) to said processing machine, with the locking action between said pallet (29) and one or several quick-action clamping cylinder(s) (1) carried out via at least one feed pin (3) fastened on said pallet (29) and engaging, with clamping action, in corresponding receiving elements (11, 17) on said quick-action clamping cylinder (1), and wherein the clamping connection is retained via tensioning springs (4) while a hydraulic piston (9) can be operated for unlocking, and wherein the space between the central feed pin (3) and said tensioning springs is sealed in said quick-action clamping cylinder (1), **characterised in that** a central sealing ring is disposed in said quick-action clamping cylinder (1) for sealing the space, which ring is protected by a removable retaining ring (6) in an upward direction from axial displacement whilst it is protected by a further retaining ring (21) in a downward direction from axial displacement.

2. Device according to Claim 1, **characterised in that** said upper retaining ring (6) and/or said lower retaining ring (21) are configured as Seeger circlip ring for protection from axial displacement.

3. Device according to any of the Claims 1 to 2, **characterised in that** said lower retaining ring (21) is disposed laterally on a vertically downwardly oriented branch of a cover (7) of said quick-action clamping cylinder (1).

4. Device according to any of the Claims 1 to 3, **characterised in that** said tensioning springs (4) are radially externally located and disposed laterally of said feed pin (3).

5. Device according to any of the Claims 1 to 4, **characterised in that** said central sealing ring (5) is supported on said hydraulic piston (9) via a sealing ring (10) by a vertically downwardly oriented branch.

6. Device according to any of the Claims 1 to 5, **characterised in that** said cover (7) with its downwardly oriented branch is supported on a sealing ring (8) disposed on said hydraulic piston (9) for sealing the cover/piston region (7, 9).

7. Device according to any of the Claims 5 to 6, **characterised in that** said sealing ring (8) and/or said sealing ring (10) is configured as O-ring.

8. Device according to any of the Claims 1 to 7, **characterised in that** said feed pin (3) is disposed in a central bore (11) while said tensioning springs (4), which are preferably configured as disk tensioning springs, are disposed in an undercut (12) of said quick-action clamping cylinder (1).

9. Device according to any of the Claims 3 to 9, **characterised in that** said cover (7) of said quick-action clamping cylinder (1) is detachably connected by means of screws (13) to the lower part (2) of said quick-action clamping cylinder.

10. Device according to any of the Claims 1 to 9, **characterised in that** a ball retainer ring (16) supported by means of an O-ring (15) on said hydraulic piston (9) is provided with balls (17) supported in an annular space (24) and bearing respectively against an annular groove (22, 23) of said feed pin (3) and said hydraulic piston (9).

11. Device according to any of the Claims 1 to 10, **characterised in that** said feed pin (3) comprises an annular flange (14).

12. Device according to any of the Claims 1 to 11, **characterised in that** a pressure space (20) connected to a feeder line (18) with an oil supply means (19) is configured in said quick-action clamping cylinder (1) between a lower part (2) and said hydraulic piston (9).

13. Device according to any of the Claims 8 to 12, **characterised in that** said undercut (12) is adapted to be pressurised by means of a pressurising medium in order to increase the feed force.

14. Device according to any of the Claims 1 to 13, **characterised in that** said device is integrated into a supporting table.

15. Device according to any of the Claims 1 to 14, **characterised in that** said feed pin (3) has a single-part or multi-part configuration.

16. Device according to any of the Claims 1 to 15, **characterised in that** said feed pin (3) is fastened in said pallet (29) by means of a pressure pad (30) and a screw (32) passing therethrough.

## Revendications

1. Dispositif à fixer, de façon amovible, de pièces à usiner sur une machine d'usinage, comprenant une palette (29), sur laquelle lesdites pièces à usiner sont fixées, de façon amovible, et qui est apte à être reliée, de façon amovible, via cette palette (29), à ladite machine d'usinage, au verrouillage entre ladite palette (29) et un ou plusieurs cylindre(s) de serrage (1) à action rapide (1) étant réalisé via au moins un boulon d'approche (3) fixé sur ladite palette (29) et en prise, par effet de serrage, dans des éléments récepteurs correspondants (11, 17) sur ledit cylindre de serrage à action rapide (1), et dans lequel le raccord à serrage est maintenu via des ressorts tendeurs (4), pendant qu'un piston hydraulique (9) est opérable pour le desserrage, et dans lequel l'espace entre le boulon d'approche (3) central et des ressorts tendeurs est rendu étanche dans ledit cylindre de serrage à action rapide (1), **caractérisé en ce qu'**un anneau d'étanchéité central est disposé dans ledit cylindre de serrage à action rapide (1) pour l'étanchéité de l'espace, cet anneau étant protégé par un anneau amovible (6), en sens en haut, contre un déplacement axial, pendant qu'il est protégé par un anneau additionnel (21), en un sens en bas, contre un déplacement axial.

2. Dispositif selon la revendication 1, **caractérisé en ce que** ledit anneau supérieur (6) et/ou ledit anneau inférieur (21) sont configurés sous forme d'un anneau de retenue type Seeger comme protection contre un déplacement axial.

3. Dispositif selon une quelconque des revendications 1 à 2, **caractérisé en ce que** ledit anneau inférieur (21) est disposé latéralement sur une branche d'un couvercle (7), qui est orientée en bas en sens vertical, dudit cylindre de serrage (1) à action rapide.

4. Dispositif selon une quelconque des revendications 1 à 3, **caractérisé en ce que** lesdits ressorts tendeurs (4) sont disposés aux points radialement extérieurs et arrangés latéralement dudit boulon d'approche (3).

5. Dispositif selon une quelconque des revendications 1 à 4, **caractérisé en ce que** ledit anneau central (5) est appuyé sur ledit piston hydraulique (9) via un anneau d'étanchéité (10) par une branche orientée en sens vertical en bas.

6. Dispositif selon une quelconque des revendications 1 à 5, **caractérisé en ce que** ledit couvercle (7) avec sa branche orientée en bas est appuyé sur un anneau d'étanchéité (8) disposé sur ledit piston hydraulique (9) afin de rendre étanche la zone de couvercle/piston (7, 9).

7. Dispositif selon une quelconque des revendications 5 à 6, **caractérisé en ce que** ledit anneau d'étanchéité (8) et/ou ledit anneau d'étanchéité (10) est configuré sous forme d'une rondelle annulaire.

8. Dispositif selon une quelconque des revendications 1 à 7, **caractérisé en ce que** ledit boulon d'approche (3) est disposé dans un alésage central (11) pendant que lesdits ressorts tendeurs (4), qui sont configurés, de préférence, sous forme de ressorts tendeurs du type Belle-ville, sont disposés dans un dégagement par rainure (12) dudit cylindre de serrage à action rapide (1).

9. Dispositif selon une quelconque des revendications 3 à 9, **caractérisé en ce que** ledit couvercle (7) dudit cylindre de serrage à action rapide (1) est relié, de façon amovible, moyennant des vis (13) à la partie inférieure (2) dudit cylindre de serrage à action rapide.

10. Dispositif selon une quelconque des revendications 1 à 9, **caractérisé en ce qu'**une cage à billes (16) appuyée moyennant une rondelle annulaire (15) sur ledit piston hydraulique (9) est munie de billes (17) logées dans un espace annulaire (24), dont chacune porte contre une rainure annulaire respective (22, 23) dudit boulon d'approche (3) et dudit piston hydraulique (9).

11. Dispositif selon une quelconque des revendications 1 à 10, **caractérisé en ce que** ledit boulon d'approche (3) comprend une bride annulaire (14).

12. Dispositif selon une quelconque des revendications 1 à 11, **caractérisé en ce qu'**un espace de compression (20) raccordé à un conduit d'alimentation (18) aux moyens d'alimentation en huile (19) est formé dans ledit cylindre de serrage à action rapide (1) entre une partie inférieure (2) et ledit piston hydraulique (9).

13. Dispositif selon une quelconque des revendications 8 à 12, **caractérisé en ce que** ledit dégagement par rainure (12) est apte à être mis en pression moyennant un milieu de compression afin d'augmenter l'effort d'approche.

14. Dispositif selon une quelconque des revendications 1 à 13, **caractérisé en ce que** ledit dispositif est intégré dans une table de machine.

15. Dispositif selon une quelconque des revendications 1 à 14, **caractérisé en ce que** ledit boulon d'approche (3) a une configuration en une partie ou en plusieurs parties.

16. Dispositif selon une quelconque des revendications 1 à 15, **caractérisé en ce que** ledit boulon d'approche (3) est fixé dans ladite palette (29) moyennant une contre-boute-rolle (30) et une vis (32) passant en travers.
